# EUROPEAN PATENT SPECIFICATION

(11) **EP 2 903 381 B1**
(45) Date of publication and mention of the grant of the patent: **22.03.2017**
(21) Application number: 13841922.1
(22) Date of filing: 26.09.2013
(51) Int. Cl.: H04W 72/12, H04W 72/04

(54) **RADIO RESOURCE ADJUSTING METHOD AND DEVICE**
VERFAHREN UND VORRICHTUNG ZUR ANPASSUNG VON FUNKRESSOURCEN
PROCÉDÉ ET DISPOSITIF DE RÉGLAGE DE RESSOURCES RADIO

(30) Priority: 26.09.2012 CN 201210374361
(43) Date of publication of application: 05.08.2015
(73) Proprietor: ZTE Corporation, Shenzhen, Guangdong 518057 (CN)
(72) Inventor: XIE, Baoguo, Shenzhen Guangdong 518057 (CN); LI, Zhijun, Shenzhen Guangdong 518057 (CN)
(74) Representative: Deambrogi, Edgardo
(86) International application number: PCT/CN2013/084324
(87) International publication number: WO 2014/048345

(56) References cited:
- WO-A1-2011/085687
- WO-A1-2014/035418
- WO-A1-2015/013038
- WO-A2-2015/019180
- CN-A- 1 520 653
- CN-A- 101 557 644
- CN-A- 101 635 932
- US-A1- 2002 172 178
- US-A1- 2003 007 456
- US-A1- 2006 120 312
- US-A1- 2011 199 934
- US-A1- 2012 120 843

## Description

### Technical Field

The present invention relates to the field of communications, including, e.g., a method and device for adjusting radio resource.

### Background

At present, a Machine to Machine (M2M) communication service has been gradually and widely applied, for example, applications thereof in logistics system, remote meter reading, intelligent home, etc. An M2M service provider mainly uses the existing radio networks to carry out a service, for example, Packet Switched (PS) networks such as a General Packet Radio Service (GPRS) network and an Evolved Packet System (EPS) network.

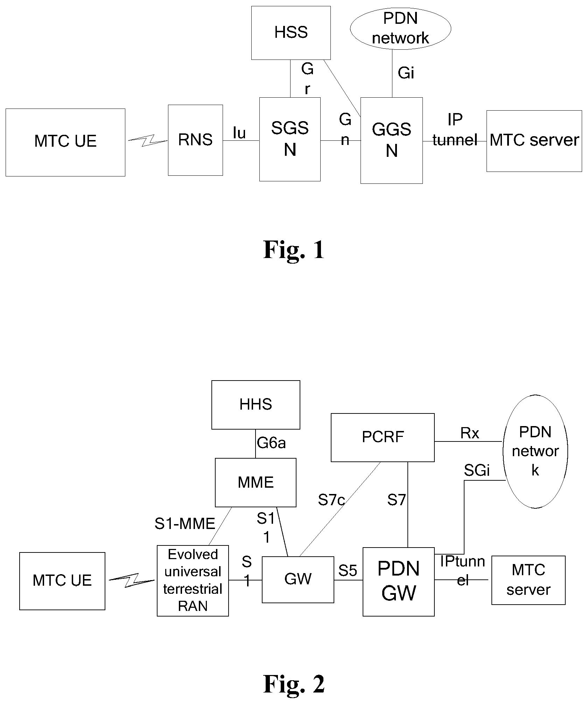

In the 3rd generation mobile communication system, GPRS evaluates to a Universal Mobile Telecommunication System Packet Switch (UMTS PS) domain. Fig. 1 is a schematic diagram of a network architecture of the UMTS PS according to the related art; as shown in Fig. 1, the network architecture comprises the network elements as follows:

A Radio Network System (RNS), which comprises a Node B and a Radio Network Controller (RNC). The Node B provides an air interface connection for a terminal; and the RNC is mainly used for managing radio resources and controlling the Node B. The RNC is connected to the Node B through an Iub interface, and the terminal accesses a packet core of a UMTS through the RNS.

A Serving GPRS Support Node (SGSN) is connected to the RNS through an Iu interface, and is used for saving routing area position information about a user and is responsible for security and access control.

A Gateway GPRS Support Node (GGSN) is connected to the SGSN through a Gn interface internally, and is responsible for allocating Internet Protocol (IP) addresses of a terminal and realizing gateway functions to an external network.

A Home Location Register (HLR) is connected to the SGSN through a Gr interface and is connected to the GGSN through a Gc interface, and is used for saving subscription data of a user and an SGSN address where the user is currently located.

A Packet Data Network (PDN) is connected to the GGSN through a Gi interface, and is used for providing a service network based on packets for the user.

In Fig. 1, a Machine Type Communication (MTC) User Equipment (UE) needs to transmit data information to an MTC server or other MTCUEs through GPRS network transmission. The GPRS network establishes a tunnel between the RNC-SGSN-GGSN for this transmission, wherein the tunnel is established based on a GPRS Tunneling Protocol (GTP), and the data information is transmitted reliably through a GTP tunnel.

The System Architecture Evolution (SAE) is proposed to enable an Evolved Packet System (EPS) to provide a higher transmission rate, a shorter transmission delay, and optimized packets, and is proposed to support the mobility management among Evolved UTRAN (E-UTRAN), UMTS terrestrial RAN (UTRAN), Wireless Local Area Network (WLAN) and other access networks of the non-3rd generation partnership project (3GPP).

Fig. 2 is a schematic diagram of a network architecture of the EPS according to the related art; as shown in Fig. 2, a network element contained in an evolved RAN (E-RAN) is an evolved Node B (eNode B), which is used for providing radio resources for the access of a user; a packet data network (PDN) is a network providing a service for a user; and an EPC provides a lower delay and allows more radio access systems to access, and the EPC comprises the network elements as follows:
a Mobility Management Entity (MME) is a control plane function entity and a server for temporarily storing user data, is responsible for managing and storing the context (for example, a user identification, a mobility management state, a user security parameter) of the UE, allocating a temporary identification for a user, and when the UE is resided in the tracking area or the network, the MME is responsible for authenticating the user.

A Serving Gateway (SGW or S-GW) is a user plane entity and is responsible for user plane data routing processing, terminates downlink data of the UE in the idle (ECM_IDLE) state, manages and stores the context of SAE bearer of the UE, for example, IP bearer service parameters, routing information inside a network, etc.. The SGW is an anchor of a user plane inside a 3GPP system, and a user can only correspond to one SGW at one moment;

A PDN Gateway (PGW or P-GW) is a gateway being responsible for the UE to access the PDN, allocating a user IP address, and is also a mobility anchor of the 3GPP and non-3GPP access systems, and the functions of the PGW also comprise policy implementation and charging support. A user can access a plurality of PGWs at the same moment. A Policy and Charging Enforcement Function (PCEF) entity is also located in the PGW.

In physical, the SGW and PGW may be integrated, and a user plane elements of an EPC system comprises the SGW and the PGW.

A Policy and Charging Rules Function (PCRF) entity is responsible for providing policy control and charging rules for the PCEF.

A Home Subscriber Server (HSS) is responsible for storing user subscription data permanently, and the content stored by the HSS comprises an International Mobile Subscriber Identification (IMSI) of the UE and an IP address of the PGW.

An MTC server is mainly responsible for performing operations such as information collection and data storage/processing on an MTC User Equipment (MTC UE), and can perform necessary management on the MTC UE.

The MTC UE is generally responsible for collecting information about several collectors, accessing a core network through a RAN node, and interacting data with the MTC server.

In Fig. 2, the MTC UE needs to transmit data information to the MTC server or other MTC UEs through an EPS network. An SAE network establishes a GTP tunnel between the SGW-PGW for this transmission, and the data information is reliably transmitted through the GTP tunnel.

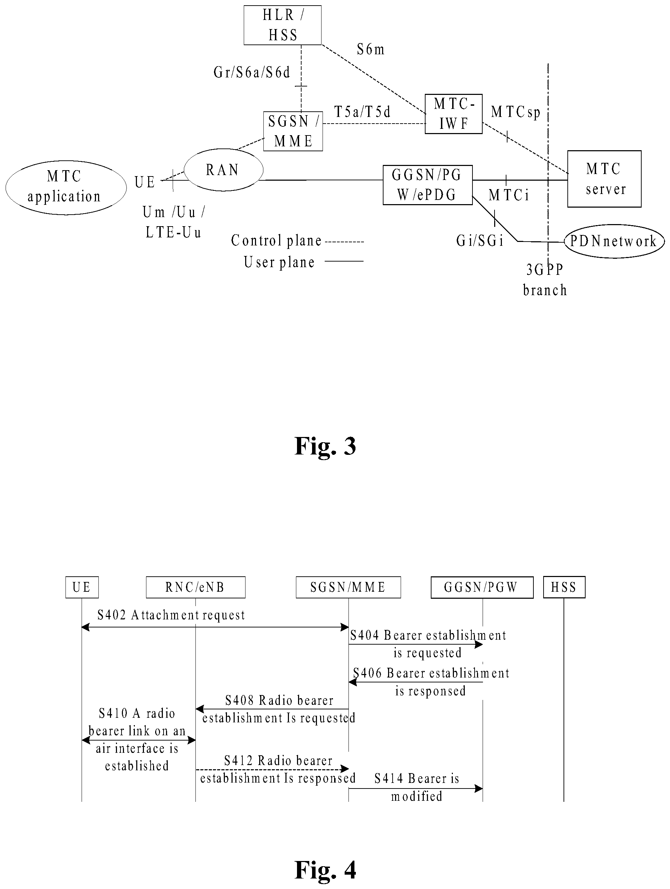

According to the requirements of M2M services, various requirements such as performing activation and small data volume transmission on a terminal are required to be implemented by a network, and therefore, the PS packet network architecture are enhanced. An MTC enhanced architecture of the PS network is as shown in Fig. 3, an MTC IWF (Inter Working Function) network element and related interfaces are introduced in the PS network architecture. In Fig. 3, the MTC server is used for providing M2M application control for the user, and the MTC server is mainly responsible for performing operations such as information collection and data storage/processing on an MTC equipment, and can perform necessary management on the MTC User Equipment (MTC UE). The MTC IWF network element is responsible for performing network topology hiding and application layer and bearer layer protocol convention, uses an MTCsp interface to connect with the MTC server, uses S6m interface to connect with HSS/HLR, and uses T5a/d to connect with SGSN/MME; and an MTC interface is used to connect with the PGW, so as to serve the implementation of the M2M service. The functions of the existing MTC IWF are mainly receiving an activation message of the MTC server, and issuing the activation message to an MTC terminal through a related network element of the 3GPP network.

The basis flow of the MTC terminal accessing the 3GPP packet network is as shown in Fig. 4, and the specific steps are as follows:
Step S402, a terminal initiates an attachment request to a network side and requests to access a network.

Step S404, a network side mobility management network element SGSN/MME downloads user subscription data from an HSS, and after performing authentication and authorization on the terminal, sends a bearer establishment request to a Media Gateway GGSN/PDN GW and requests to establish bearer resources.

Step S406, the GGSN/PDN GW allocates bearer resources such as IP address and Terminal Equipment Identity (TEID) to the terminal, returns a bearer establishment response message to the SGSN/MME, and returns bearer resource information to the SGSN/MME and keeps same in the bearer context.

Step S408, the SGSN/MME sends a radio bearer establishment request to a RAN (RAN), and carries a Quality of Service (QoS) parameter born in a core network to an RAN.

Step S410, the RAN maps the QoS parameter to the bandwidth of an air interface, and establishes a radio bearer link with the terminal on the air interface.

Step S412, the RAN returns a radio bearer establishment response to the SGSN/MME, notifies the success of the radio bearer establishment, and returns an IP address at the RAN side and an TEID tunnel port identification.

Step S414, the SGSN/MME initiates a bearer modification to the GGSN/PDN GW, so as to enable the download data to be sent to the IP address and port of a designated RAN.

Since in the current networks, many MTC terminals are required to be supplied power in the manner of a battery, and most of the terminals perform data transmission with the MTC server in the manner of a small data packet, such as a pressure sensor of a railway bridge, a water level monitoring sensor, an air quality monitoring sensor and a water meter reading terminal, which collect related monitoring data and then send the monitored data to the MTC server in the manner of small data packets, and these data packets may be sent frequently or occasionally.

If the data packet is frequently sent, it may be caused that the terminal enters an idle state after the network just deactivates the terminal, and then the terminal requests the access network to send a data packet, such that RRC signalling may be very frequent, and finally, a signalling storm is formed, and the normal operation of the RAN is influenced. If the data packet is occasionally sent, the terminal may also keep an access state for a period of time after the data is sent" and then the network deactivates the terminal, such that during the period of keeping the access state, since the terminal needs to keep air interface connection, the power consumption is very large, and it is disadvantageous to save the power of the terminal. At present, there are generally two modes to save the power of the terminal: one is, in a connected state, intermittent operations are controlled by using a discontinuous reception (DRX) parameter so as to achieve the purpose of power saving; and the other one is that the terminal enters an idle mode. In addition, if it is a small data packet transmission mode, the bandwidth occupied by the data thereof is relatively small, and it should be considered to perform optimization on the bandwidth of the air interface, so that more MTC terminals can enter the network.

US 2002/172178 A1, US 2011/199934 A1 and US 2012/120843 A1 provide related technical solutions; however, the above mentioned problem still remains unsolved.

### Summary

A method and device for adjusting radio resource are provided in the present invention, so as to at least solve the problems of signalling storm and that it is disadvantageous to save the power of the terminal in the related art due to the fact that a terminal send data packets frequently or occasionally.

The present invention is defined by independent claims, to which reference should now be made.

According to one aspect of the present invention, a method for adjusting radio resource is provided, comprising: acquiring, by a Radio Access Network (RAN), a radio resource using parameter of a terminal, wherein the radio resource using parameter of the terminal is used for indicating a frequency for receiving and sending data packets and/or a data packet transmission bandwidth when the terminal accesses network; and adjusting, by the RAN, a radio bearer resource occupied by the terminal according to the radio resource using parameter of the terminal, wherein an adjusted radio bearer resource is used by the terminal to transmit data.

According to an embodiment of the present invention, acquiring, by the RAN, the radio resource using parameter of the terminal comprises: acquiring, by a core network side, the radio resource using parameter of the terminal; and receiving, by the RAN, the radio resource using parameter of the terminal from the core network side.

According to an embodiment of the present invention, acquiring, by the core network side, the radio resource using parameter of the terminal comprises one of the following: acquiring, by the core network side, the radio resource using parameter of the terminal from subscription data; acquiring, by a Media Gateway (MG) at the core network side, the radio resource using parameter of the terminal according to a frequency for receiving and sending data packets and a data packet transmission bandwidth; and acquiring, by a mobility management network element at the core network side, the radio resource using parameter of the terminal according to a frequency of an access signalling of the terminal. According to an embodiment of the present invention, acquiring, by the RAN, the radio resource using parameter of the terminal comprises: measuring, by the
RAN, the frequency for receiving and sending data packets and the data packet transmission bandwidth of the terminal; and acquiring, by the RAN, the radio resource using parameter of the terminal according to a measurement result.

According to an embodiment of the present invention, adjusting, by the RAN, the radio bearer resource occupied by the terminal according to the radio resource using parameter of the terminal comprises: adjusting, by the RAN, an idle timer time parameter of the terminal and/or a radio bearer bandwidth occupied by the terminal according to an operator policy, a data packet characteristic of the terminal and the radio resource using parameter of the terminal, wherein the idle timer time parameter is used for representing a time interval of the terminal entering into an idle state from a connection state.

According to an embodiment of the present invention, adjusting, by the RAN, the idle timer time parameter of the terminal according to the radio resource using parameter of the terminal comprises: judging, by the RAN, that the terminal send data packets occasionally or frequently according to the radio resource using parameter of the terminal; shortening, by the RAN, the idle timer time parameter based on that the terminal send data packets occasionally; and prolonging, by the RAN, the idle timer time parameter based on that the terminal send data packets frequently.

According to an embodiment of the present invention, adjusting, by the RAN, the radio bearer bandwidth of the terminal according to the radio resource using parameter of the terminal comprises: adjusting, by the RAN, the radio bearer bandwidth occupied by the terminal according to the data packet transmission bandwidth in the radio resource using parameter of the terminal.

According to an embodiment of the present invention, after the RAN adjusts the radio bearer resource occupied by the terminal according to the radio resource using parameter of the terminal, further comprising: sending, by the RAN, an adjusted radio bearer resource parameter to a core network.

According to an embodiment of the present invention, the radio resource using parameter of the terminal comprises at least one of the following: a frequency for receiving and sending data packets, a data packet transmission bandwidth of the terminal, a frequency of an access signalling of the terminal, and Discontinuous Reception (DRX) parameters.

According to an embodiment of the present invention, after the RAN adjusts the radio bearer resource occupied by the terminal according to the radio resource using parameter of the terminal, further comprising: Controlling, by the RAN, when the terminal keeps in a connection state for a long time, the terminal to operate by using a long DRX parameter.

According to an embodiment of the present invention, the data packets are small data packets.

According to an embodiment of the present invention, comprising: an acquiring component, configured to acquire a radio resource using parameter of a terminal, wherein the radio resource using parameter of the terminal is used for indicating a frequency for receiving and sending data packets and/or a data packet transmission bandwidth when the terminal accesses network; and a radio resource adjusting component, configured to adjust a radio bearer resource occupied by the terminal according to the radio resource using parameter of the terminal, wherein an adjusted radio bearer resource is used by the terminal to transmit data.

According to an embodiment of the present invention, the acquiring component comprises: a receiving element, configured to receive the radio resource using parameter of the terminal from a core network side.

According to an embodiment of the present invention, the acquiring component comprises: a measuring element, configured to measure the frequency for receiving and sending data packets and the data packet transmission bandwidth of the terminal; and an acquiring element, configured to acquire the radio resource using parameter of the terminal according to a measurement result.

According to the present invention, when a terminal accessing a 3GPP network frequently or occasionally sending data, a network side optimizes to adjust the radio resource according to the acquired radio resource using parameter of the terminal. On the premise that user experience is not reduced, the network resource is optimized, thus avoiding a signalling storm caused by the terminal frequently initiating data packet transmission, saving power consumption of the terminal to a certain extent, maximizing the energy conservation of the terminal, and achieving better network optimization and power saving effects. In addition, the radio bearer bandwidth of the transmission data packet can be reduced to a certain extent (especially for a small data packet, since the bandwidth occupied by the small data packet is relatively small, which is more required to optimize the air interface bandwidth), so as to enable the radio bearer bandwidth to be matched with the bandwidth of the data packet, which thereby, on the premise that user experience is not reduced, releasing some bandwidth resources, and realizing the maximization of the radio resource utilization rate.

### Brief description of the accompanying drawings

Drawings, provided for further understanding of the present invention and forming a part of the specification, are used to explain the present invention together with embodiments of the present invention rather than to limit the present invention. In the drawings:
Fig. 1 is a schematic diagram of a network architecture of a UMTS PS according to the related art;
Fig. 2 is a schematic diagram of a network architecture of an EPS according to the related art;
Fig. 3 is a schematic diagram of a system architecture of an enhanced PS network according to the related art;
Fig. 4 is flowchart of resource allocation and bearer establishment for an MTC terminal accessing a 3GPP packet network according to the related art;
Fig. 5 is a flowchart of a method for adjusting radio resource according to an embodiment of the present invention;
Fig. 6 is a structural diagram of a device for adjusting radio resource according to an embodiment of the present invention;
Fig. 7 is a flowchart of a method for adjusting radio resource according to preferred embodiment I of the present invention;
Fig. 8 is a flowchart of a method for adjusting radio resource according to preferred embodiment II of the present invention;
Fig. 9 is a flowchart of a method for adjusting radio resource according to preferred embodiment III of the present invention; and
Fig. 10 is a flowchart of a method for adjusting radio resource according to preferred embodiment IV of the present invention.

### Detailed description of embodiments

It should be noted that the embodiments of the present application and the characteristics of the embodiments can be combined with each other if no conflict is caused. The present invention will be explained below with reference to the drawings and in conjunction with the embodiments in detail.

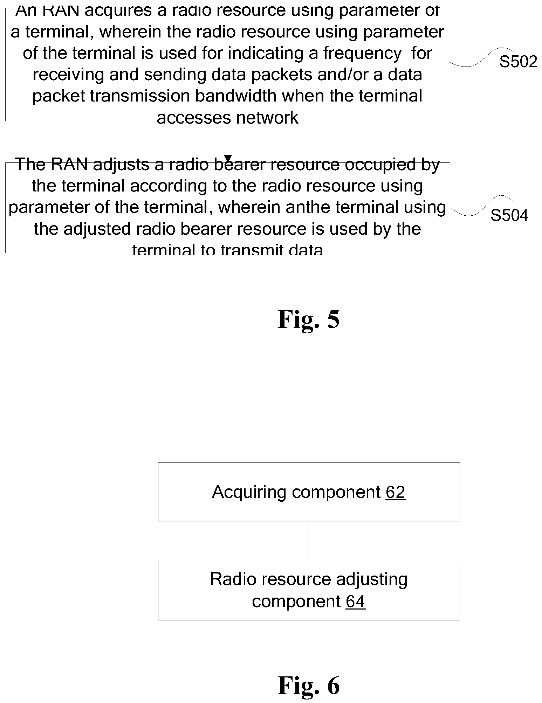

A method for adjusting radio resource is provided in the embodiment of the present invention. Fig. 5 is a flowchart of a method for adjusting radio resource according to an embodiment of the present invention; as shown in Fig. 5, the following steps S502-S504 are included.

Step S502, An RAN acquires a radio resource using parameter of a terminal, wherein the radio resource using parameter of the terminal is used for indicating a frequency for receiving and sending data packets and/or a data packet transmission bandwidth when the terminal accesses network.

Step S504, the RAN adjusts a radio bearer resource occupied by the terminal according to the radio resource using parameter of the terminal, wherein an adjusted radio bearer resource is used by the terminal to transmit data.

In the related art, a signalling storm is caused due to the fact that a terminal frequently send data packets, and the data package sending occasionally is disadvantageous to save the power of the terminal. In the embodiments of the present invention, when a terminal accessing a 3GPP network frequently or occasionally sending data, a network side optimizes to adjust the radio resource according to the acquired radio resource using parameter of the terminal. On the premise that user experience is not reduced, the network resource is optimized, thus avoiding a signalling storm caused by the terminal frequently initiating data packet transmission, saving power consumption of the terminal to a certain extent, maximizing the energy conservation of the terminal, and achieving better network optimization and power saving effects. In addition, the radio bearer bandwidth of the transmission data packet can be reduced to a certain extent (especially for a small data packet, since the bandwidth occupied by the small data packet is relatively small, which is more required to optimize the air interface bandwidth), so as to be matched with the bandwidth of the data packet, which thereby, on the premise that user experience is not reduced, releasing some bandwidth resources, and realizing the maximization of the radio resource utilization rate.

According to an embodiment of the present invention, the radio resource using parameter of the terminal comprises at least one of the following: the frequency for receiving and sending the data packets and the data packet transmission bandwidth of the terminal, the frequency of the terminal accessing signalling, and DRX parameters. The data packet transmission bandwidth may comprise parameters such as the maximum transmission bandwidth and the average transmission bandwidth of the data package. The data packet transmission bandwidth may be obtained by calculating the length of a data package in unit time.

In step S502, the radio resource using parameter of the terminal may be acquired by the RAN through the following two methods: (1) the radio resource using parameter of the terminal is acquired by a core network side, and then is sent to the RAN; and (2) the radio resource using parameter of the terminal is measured directly and acquired by the RAN. The two manners are described as follows.

### (1) The radio resource using parameter of the terminal is acquired by the core network side, and then is sent to the RAN

It may be realized through the following steps: the core network side acquires the radio resource using parameter of the terminal; and the RAN receives the radio resource using parameter of the terminal from the core network side.

Preferably, the core network side may acquire the radio resource using parameter of the terminal by one of the following: the core network side acquires the radio resource using parameter of the terminal from subscription data; a media gateway at the core network side acquires the radio resource using parameter of the terminal according to the frequency for receiving and sending data packets and the data packet transmission bandwidth; and the mobility management network element at the core network side acquires the radio resource using parameter of the terminal according to the frequency of the terminal accessing signalling.

### (2) The RAN measures directly and acquires the radio resource using parameter of the terminal

It may be realized through the following steps: the RAN acquires the frequency for receiving and sending the data packets and the data packet transmission bandwidth of the terminal; and the RAN acquires the radio resource using parameter of the terminal according to the measurement result.

In a preferred embodiment of the present invention, it is considered that not all the terminals need to perform radio resource adjusting, for example, in some cases, only terminals with small data need to perform radio resource adjusting, and under some operator polices, the terminals with small data also need not to perform radio resource adjusting; therefore, step S504 comprises: the RAN adjusts an idle timer time parameter of the terminal and/or a radio bearer bandwidth occupied by the terminal according to an operator policy and a data packet characteristic of the terminal and the radio resource using parameter of the terminal, wherein the idle timer time parameter is used for representing a time interval of the terminal entering into an idle state from a connection state. In this preferred embodiment, by way of adjusting the idle timer time parameter of the terminal, i.e. by way of controlling the time interval of the terminal entering into the idle state, the terminal releases the radio bearer resource timely within the shortest time and enters the idle state when the data packet is sent occasionally; and the terminal keeps the connection state as far as possible in the time interval of receiving and sending the data packet when the data packets are sent frequently.

It should be noted that in practical applications, the network side (a core network or an access network) in step S502 can also measure the parameter according to the operator policy to obtain the radio resource using parameter of the terminal.

According to an embodiment of the present invention, the RAN adjusts the idle timer time parameter of the terminal according to the radio resource using parameter of the terminal, which comprises: the RAN judges that the terminal send data packets occasionally or frequently according to the radio resource using parameter of the terminal; the idle timer time parameter is shortened by the RAN based on that the terminal send the data packets occasionally; and the idle timer time parameter is prolonged by the RAN based on that the terminal send the data packets frequently. In this preferred embodiment, when sending the data packet occasionally, the terminal performs adjusting to shorten the idle timer time parameter, such that the RRC connection is released immediately to enter the idle state when the terminal ends the data packet transmission, and the terminal enters the idle state rapidly after transmitting the data to save power; and when sending the data packet frequently, the terminal performs adjusting to prolong the idle timer time parameter according to the operator policy and the local configuration of the RAN, such that the RAN does not release the RRC connection during the time interval of the data packet transmission of the terminal, and the terminal is still in the connection state when receiving and sending the data packet again. Such that related signalling about RRC releasing and RRC connection from the RAN is avoided, and the signalling storm is avoided to the most extent.

According to an embodiment of the present invention, adjusting, by the RAN, the radio bearer bandwidth occupied by the terminal according to the radio resource using parameter of the terminal comprises: the RAN adjusts the radio bearer bandwidth occupied by the terminal according to the data packet transmission bandwidth in the radio resource using parameter of the terminal. In the preferred embodiment, the radio bearer bandwidth of the transmission data packet is reduced to a certain extent (especially for a small data packet, since the bandwidth occupied by the small data packet is relatively small, which is more required to optimize the air interface bandwidth), so as to enable the radio bearer bandwidth to be matched with the bandwidth of the data packet, which thereby, on the premise that user experience is not reduced, releasing some bandwidth resources, saving air interface resources and realizing the maximization of the radio resource utilization rate.

According to an embodiment of the present invention, after the RAN adjusts the radio bearer resource occupied by the terminal according to the radio resource using parameter of the terminal, the method further comprises: the RAN sends an adjusted radio bearer resource parameter to a core network. The core network modifies the core network bearer resource according to the adjusted radio bearer resource, such as the bearer bandwidth, such that the QoS parameter of the radio bearer keeps consistent with that of the core network bearer.

According to an embodiment of the present invention, after the RAN adjusts the radio bearer resource occupied by the terminal according to the radio resource using parameter of the terminal, the method further comprises: when the terminal keeps in a connection state for a long time, the RAN uses long DRX parameters to control the terminal to operate. In this preferred embodiment, when the terminal is always in the connected state, the long DRX parameter may be used to save power, so that the terminal performs data receiving and sending in the short DRX ON period and does not perform data receiving and sending in the long DRX OFF period, thereby realizing the energy conservation of the terminal. The long DRX parameter may be acquired from the SGSN/MME, and may also be formulated by the RAN according to the operator policy.

According to an embodiment of the present invention, the data packets are small data packets. A device for adjusting radio resource is further provided in the embodiments of the present invention, which can be used to realize the method for adjusting radio resource. Fig. 6 is a structural diagram of a device for adjusting radio resource according to an embodiment of the present invention; as shown in Fig. 6, the device comprises an acquiring component 62 and a radio resource adjusting component 64. The structures of the two components are described below in detail.

The acquiring component 62 is configured to acquire a radio resource using parameter of a terminal, wherein the radio resource using parameter of the terminal is used for indicating the frequency for receiving and sending data packets and/or a data packet transmission bandwidth when the terminal accesses network; and the radio resource adjusting component 64 is connected to the acquiring component 62 and configured to adjust a radio bearer resource occupied by the terminal according to the radio resource using parameter of the terminal acquired by the acquiring component 62, wherein the radio bearer resource adjusted by the radio resource adjusting component **64** is used by the terminal to transmit data.

According to an embodiment of the present invention, the radio resource using parameter of the terminal comprises at least one of the following: the frequency for receiving and sending data packets and the data packet transmission bandwidth of the terminal, the frequency of the terminal accessing signalling, and DRX parameters.

According to an embodiment of the present invention, the acquiring component **62** comprises: a receiving element, which is configured to receive the radio resource using parameter of the terminal from the core network side. Herein, the radio resource using parameter of the terminal acquired by the RAN is that acquired by the core network.

According to an embodiment of the present invention, acquiring, by the core network side, the radio resource using parameter of the terminal comprises one of the following: the core network side acquires the radio resource using parameter of the terminal from subscription data; an MG at the core network side acquires the radio resource using parameter of the terminal according to the frequency for receiving and sending data packets and the data packet transmission bandwidth; and the mobility management network element at the core network side acquires the radio resource using parameter of the terminal according to the frequency of the access signalling of the terminal.

According to an embodiment of the present invention, the acquiring component **62** further comprises: a measuring element, which is configured to measure the frequency for receiving and sending data packets and the data packet transmission bandwidth of the terminal; and an acquiring element, which is connected to the measuring element and is configured to acquire the radio resource using parameter of the terminal according to the measurement result.

According to an embodiment of the present invention, the radio resource adjusting component **64** comprises: an adjusting element, which is configured to adjust an idle timer time parameter of the terminal and/or the radio bearer bandwidth occupied by the terminal according to an operator policy, a data packet characteristic of the terminal and the radio resource using parameter of the terminal, wherein the idle timer time parameter is used for representing a time interval of the terminal entering into an idle state from a connection state.

Adjusting, by the adjusting element, the idle timer time parameter of the terminal comprises: whether the terminal send the data packets occasionally or frequently according to the radio resource using parameter of the terminal is judged; the RAN shortens the idle timer time parameter based on that the terminal send the data packets occasionally,; and the RAN prolongs the idle timer time parameter based on that the terminal send the data packets frequently.

The adjusting element adjusts the radio bearer bandwidth occupied by the terminal, which comprises: the radio bearer bandwidth occupied by the terminal is adjusted according to the data packet length information in the radio resource using parameter of the terminal.

According to an embodiment of the present invention, the device further comprises: a sending component, which is connected to the radio resource adjusting component 64 and is configured to send the radio bearer resource parameter adjusted by the radio resource adjusting component **64** to the core network.

According to an embodiment of the present invention, when the terminal keeps in the connection state for a long time, the RAN uses long DRX parameters to control the terminal to operate.

According to an embodiment of the present invention, the data packets are small data packets.

It needs to be noted that the device for adjusting radio source described in the device embodiments corresponds to the above method embodiments, and the specific implementation of the device embodiments has been described in detail in the method embodiments, which need not be described herein.

In another preferred embodiment, the device for adjusting radio resource (a network side) may further be realized through the following components: a radio resource measurement component, a radio resource parameter transferring component and a radio resource adjusting component. This preferred embodiment is described by taking a small data packet as an example.

The radio resource measurement component (realizing functions of the acquiring component **62**) is configured to measure the radio resource using parameter for a terminal receiving and sending the small data packet, wherein the radio resource using parameter for the terminal comprises at least one of the following: the frequency for initiating a service, the data packet transmission bandwidth, the frequency for access signalling, the DRX parameters.

The radio resource parameter transferring component (realizing functions of the sending component) is configured to transfer the radio resource using parameter to a radio access side by the core network side, and transfer the adjusted radio resource parameter to the core network side by the radio access side.

The radio resource adjusting component (realizing functions of the radio resource adjusting component **64**) is configured to adjust the idle timer time parameter and/or radio bearer bandwidth by the RAN according to the radio resource using parameter.

It can be seen from the description that after the terminal accesses the 3GPP network, the network side needs to perform radio resource optimization control on some terminals (for example, terminals with small data), so that it is necessary to avoid a signalling storm caused by the terminal frequently initiating data packet transmission, maximize energy conservation of the terminal, and perform air interface bandwidth adjusting according to the actual bandwidth of the data packet, such that it can be guaranteed that, on the premise that 3GPP user experience is not reduced, the optimization of the radio resource utilization is realized. It is mainly solved the problem that the network side how to perform the radio resource optimization control in the embodiments of the present invention, so as to optimize the radio resource utilization of the network, reduce the signalling storm to the most extent, optimize the power saving of the terminal, and not reduce the user experience at the same time.

In the embodiment, when the terminal accesses the network and receives and sends the data packet, the network element at the network side adjusts the idle timer time parameter of the terminal entering the idle state and the bandwidth required by the terminal to transmit the data according to the data packet characteristic, the operator policy of the terminal and the radio resource using parameter of the terminal. When sending the data packet occasionally, the terminal performs adjusting to shorten the idle timer time parameter, such that the RRC connection is released immediately to enter the idle state when the terminal ends the data packet transmission, and the terminal enters the idle state rapidly after transmitting the data to save power; and when sending the data packet frequently, the terminal performs adjusting to prolong the idle timer time parameter according to the operator policy and the local configuration of the RAN, such that the RAN does not release the RRC connection during the time interval of the data packet transmission of the terminal, and the terminal is still in the connection state when receiving and sending the data packet again. Such that related signalling about RRC releasing and RRC connection from the RAN is avoided, and the network signalling storm is avoided to the most extent. When the terminal is always in the connected state, the long DRX parameter may be used to save power, so that the terminal performs data receiving and sending in the short DRX ON period and does not perform data receiving and sending in the long DRX OFF period.

In addition, the RAN adjusts the radio bearer bandwidth according to the operator policy and the data packet transmission bandwidth in the radio resource using parameter, such as parameters about the maximum transmission bandwidth and the average transmission bandwidth of the data package, which reduces the radio bearer bandwidth for transmitting the data packet to a certain extent (especially for the small data packet), so as to enable the radio bearer bandwidth to be matched with the bandwidth of the data packet, which thereby, on the premise that user experience is not reduced, releasing some bandwidth resources, and realizing the maximization of the radio resource utilization rate.

In order to make the technical solutions and the implementation methods of the present invention more clear, the implementation process thereof is described in detail hereafter in conjunction with the preferred embodiments. In the following preferred embodiment I to embodiment IV, the small data packet is taken as an example to describe the method for adjusting radio resource.

### Preferred embodiment I

It is described in this preferred embodiment that after a terminal accesses a 3GPP network, a mobility management network element SGSN/MME acquires a radio resource using parameter of the terminal from user subscription data, and sends a Network Access Signalling (NAS) responding message carrying the radio resource using parameter of the terminal to a RAN RNC/eNB. The RAN performs radio resource dynamic adjusting of the terminal according to the radio resource using parameter of the terminal as follows: the idle timer time is shortened based on that the frequency for receiving and sending a small data packet is very low (i.e. the small data packet is sent occasionally), so that the terminal enters the idle state as soon as possible after ending the data receiving and sending to conserve energy; the idle timer time is prolonged based on that the frequency for receiving and sending a small data packet is very high (i.e. the small data packet is sent frequently), so that the terminal tries not to initiate RRC connection or RRC releasing in the time interval of receiving and sending the small data so as to reduce a signalling storm; when the current radio bearer bandwidth is higher than a subscribed data packet transmission bandwidth, the current radio bearer bandwidth is reduced properly; and when the current radio bearer bandwidth is lower than a subscribed data packet transmission bandwidth, the current radio bearer bandwidth is increased properly. When the terminal is always in the connected state, the RAN uses the long DRX parameter to save the power consumption of the terminal. By means of the dynamic adjusting, the network optimizes a network resource by the dynamic adjusting of the small data packet, thus avoiding a signalling storm, and saving power consumption of the terminal to a certain extent; meanwhile, the air interface bandwidth can be optimized, so that more MTC terminals can access the network.

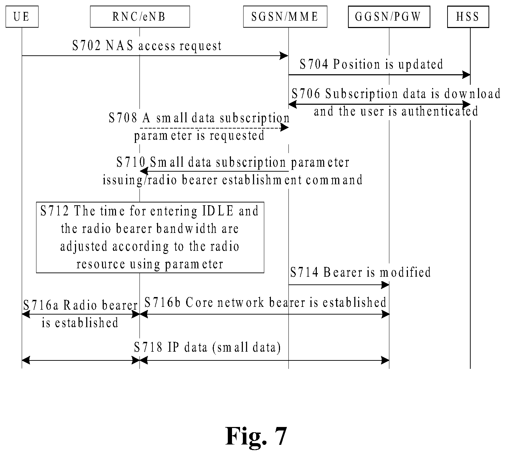

Fig. 7 is a flowchart of a method for adjusting radio resource according to preferred embodiment I of the present invention; as shown in Fig. 7, the steps are as follows:
step S702, a 3GPP terminal initiates a NAS access request, such as an attachment or position update request, to a RAN access network of a 3GPP network, and the RAN selects a serving SGSN/MME and sends the request to the SGSN/MME. The NAS access request or a Radio Resource Control (RRC) connection request may contain a small data indication.

Step S704, the SGSN/MME sends the position update request to an HSS, and the HSS identifies that the terminal is an unrestricted terminal according to an International Mobile Subscriber Identifier (IMSI) identification and inquiries the subscription data of the terminal.

Step S706, the HSS sends the subscription information of the terminal to the SGSN/MME, and the SGSN/MME performs access authorization on the terminal. The SGSN/MME can acquire the radio resource using parameter from the subscription data, wherein the radio resource using parameter comprises at least one of the following: the frequency for receiving and sending the small data packets, the data packet transmission bandwidth, the DRX parameter; and the DRX parameter may also be adjusted by the SGSN/MME according to the operator policy, such as being adjusted to be a long DRX parameter for saving power.

Step S708, optionally, when the RAN knows that the terminal is a terminal for receiving and sending the small data packets according to the small data indication, the RAN can request the radio resource using parameter of the terminal to the SGSN/MME.

Step S710, the SGSN/MME sends the radio resource using parameter of the terminal to the RAN, wherein the radio resource using parameter of the terminal may be sent in a NAS access response message, and may also be contained in a radio bearer establishment request message initiated by the SGSN/MME to the RAN. The radio bearer establishment message may contain a subscribed QoS parameter.

Step S712, after receiving the radio resource using parameter of the terminal, the RAN establishes a radio bearer with the terminal. In addition, the idle timer time parameter and the radio bearer bandwidth are adjusted according to the small data characteristic and the operator policy.

The RAN performs radio resource dynamic adjusting of the terminal according to the radio resource using parameter of the terminal as follows: when the frequency for receiving and sending a small data packet is very low (i.e. the small data packet is sent occasionally), the idle timer time is shortened, so that the terminal enters the idle state as soon as possible after ending the data receiving and sending to conserve energy; when the frequency for receiving and sending a small data packet is very high (i.e. the small data packet is sent frequently), the idle timer time is prolonged, so that the terminal tries not to initiate RRC connection or RRC releasing in the time interval of receiving and sending the small data so as to reduce a signalling storm; when the current radio bearer bandwidth is higher than a subscribed data packet transmission bandwidth, the current radio bearer bandwidth is reduced properly; and when the current radio bearer bandwidth is lower than a subscribed data packet transmission bandwidth, the current radio bearer bandwidth is increased properly.

When the terminal is always in the connected state, the RAN uses the long DRX parameter to save the power consumption of the terminal. The terminal performs data receiving and sending in the short DRX ON period and does not perform data receiving and sending in the long DRX OFF period.

Step S714, after the radio bearer is established and the radio bearer parameter of the radio bearer is adjusted, the SGSN/MME is notified to modify the core network bearer according to the adjusted bandwidth, such that the core network bandwidth is consistent with the radio side bandwidth.

Step S716a and step S716b, the establishment of the radio bearer and the core network bearer is completed, and the bandwidth of the radio bearer keeps consistent with the bandwidth of the core network bearer.

Step S718, the terminal receives and sends the small data packet on the radio bearer and the core network bearer, and since the radio resource has been adjusted dynamically, network optimization and terminal energy conservation effects can be optimized.

### Preferred embodiment II

It is described in this preferred embodiment that after a terminal accesses a 3GPP network, a RAN acquires a radio resource using parameter of the terminal according to the measurement of the interval for receiving and sending small data and the data packet length. The RAN performs radio resource dynamic adjusting of the terminal according to the radio resource using parameter of the terminal as follows: when the frequency for receiving and sending a small data packet is very low (i.e. the small data packet is sent occasionally), the idle timer time is shortened, so that the terminal enters the idle state as soon as possible after ending the data receiving and sending to conserve energy; when the frequency for receiving and sending a small data packet is very high (i.e. the small data packet is sent frequently), the idle timer time is prolonged, so that the terminal tries not to initiate RRC connection or RRC releasing in the time interval of receiving and sending the small data so as to reduce a signalling storm; when the current radio bearer bandwidth is higher than a data packet transmission bandwidth practically used, the current radio bearer bandwidth is reduced properly; and when the current radio bearer bandwidth is lower than a data packet transmission bandwidth practically used, the current radio bearer bandwidth is increased properly. When the terminal is always in the connected state, the RAN uses the long DRX parameter to save the power consumption of the terminal. By means of the dynamic adjusting, the network optimizes a network resource by the dynamic adjusting of the small data packet, thus avoiding a signalling storm, and saving power consumption of the terminal to a certain extent; meanwhile, the air interface bandwidth can be optimized, so that more MTC terminals can access the network.

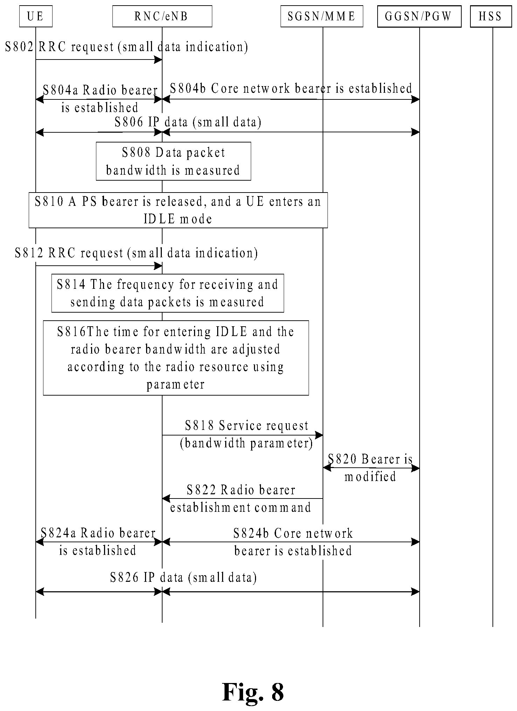

Fig. 8 is a flowchart of a method for adjusting radio resource according to preferred embodiment II of the present invention; as shown in Fig. 8, the specific steps are as follows:
step S802, a 3GPP terminal initiates an RRC establishment request to a RAN of a 3GPP network, and requests to establish a radio bearer connection. The RRC connection request may contain a small data indication.

Step S804a and step S804b, according to an attachment flow, the RAN selects a serving SGSN/MME, and the SGSN/MME performs the establishment of bearers and finally establishes a radio bearer and a core network bearer. The QoS parameters of the core network bearer are mapped to the radio bearer, which may cause that the actual bandwidth used for sending small data is inconsistent with the allocated bandwidth, and thus wasting bandwidth resources.

Step S806, the terminal receives and sends the small data packet through the radio bearer and the core network bearer.

Step S808, the RAN starts a radio resource using parameter measurement mechanism based on an operator policy, and measures in a certain period the length (such as the maximum length parameter and the average length parameter) of the small data packet received and sent in unit time on the radio bearer, and obtains the small data packet transmission bandwidth, such as parameters about the maximum transmission bandwidth and the average transmission bandwidth.

Step S810, according to a normal flow, when an idle timer overflows, the RAN releases an RRC connection, and the terminal enters the idle state.

Step S812, the terminal initiates a small data service again, and the terminal requests the RRC connection again, and requests to access to the network to perform small data receiving and sending.

Step S814, the RAN measures the frequency of the terminal receiving and sending the small data in a certain period.

Step S816, after acquiring the radio resource using parameter of the terminal, the RAN establishes a radio bearer with the terminal. In addition, the idle timer time parameter and the radio bearer bandwidth are adjusted according to the small data characteristic and the operator policy.

The RAN performs radio resource dynamic adjusting of the terminal according to the radio resource using parameter of the terminal as follows: when the frequency for receiving and sending a small data packet is very low (i.e. the small data packet is sent occasionally), the idle timer time is shortened, so that the terminal enters the idle state as soon as possible after ending the data receiving and sending to conserve energy; when the frequency for receiving and sending a small data packet is very high (i.e. the small data packet is sent frequently), the idle timer time is prolonged, so that the terminal tries not to initiate RRC connection or RRC releasing in the time interval of receiving and sending the small data so as to reduce a signalling storm; when the current radio bearer bandwidth is higher than a data packet transmission bandwidth practically used, the current radio bearer bandwidth is reduced properly; and when the current radio bearer bandwidth is lower than a data packet transmission bandwidth practically used, the current radio bearer bandwidth is increased properly.

When the terminal is always in the connected state, the RAN uses the long DRX parameter to save the power consumption of the terminal. The terminal performs data receiving and sending in the short DRX ON period and does not perform data receiving and sending in the long DRX OFF period. The long DRX parameter may be acquired from the SGSN/MME, and may also be formulated by the RAN according to the operator policy.

Step S818, after the radio bearer is established and a radio bearer parameter is adjusted, the adjusted radio bearer parameter is carried in a service request message and sent to the SGSN/ MME.

Step S820, the SGSN/MME modifies the core network bearer according to the adjusted bandwidth.

Step S822, after receiving a bearer modification response message, the SGSN/MME confirms that the QoS parameter of the core network bearer has been modified, and then initiates a radio bearer establishment/modification request to the RAN, the request message carrying an updated QoS parameter.

Step S824a to step S824b, the RAN maps the updated QoS parameter to the radio bearer, such that the bandwidth of the core network bearer keeps consistent with that of the radio bearer. The radio bearer and the core network bearer are successfully updated.

Step S826, the terminal receives and sends the small data packet on the radio bearer and the core network bearer, and since the radio resource has been adjusted dynamically, network optimization and terminal energy conservation effects can be optimized.

### Preferred embodiment III

It is described in this preferred embodiment that after a terminal accesses a 3GPP network, a Media Gateway GGSN/PDN GW at a core network side acquires a radio resource using parameter of the terminal according to the measurement of the interval for receiving and sending small data and the data packet length, and sends same to a RAN through an SGSN/ MME. The RAN performs radio resource dynamic adjusting of the terminal according to the radio resource using parameter
of the terminal as follows: when the frequency for receiving and sending a small data packet is very low (i.e. the small data packet is sent occasionally), the idle timer time is shortened, so that the terminal enters the idle state as soon as possible after ending the data receiving and sending to conserve energy; when the frequency for receiving and sending a small data packet is very high (i.e. the small data packet is sent frequently), the idle timer time is prolonged, so that the terminal tries not to initiate RRC connection or RRC releasing in the time interval of receiving and sending the small data so as to reduce a signalling storm; when the current radio bearer bandwidth is higher than a subscribed data packet transmission bandwidth practically used, the current radio bearer bandwidth is reduced properly; and when the current radio bearer bandwidth is lower than a subscribed data packet transmission bandwidth practically used, the current radio bearer bandwidth is increased properly. When the terminal is always in the connected state, the RAN uses the long DRX parameter to save the power consumption of the terminal. By means of the dynamic adjusting, the network optimizes a network resource for the dynamic adjusting of the small data packet, thus avoiding a signalling storm, and saving power consumption of the terminal to a certain extent; meanwhile, the air interface bandwidth can be optimized, so that more MTC terminals can access the network.

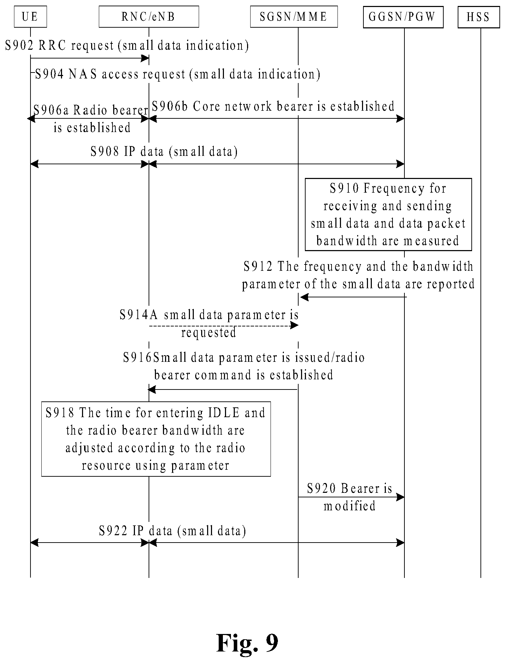

Fig. 9 is a flowchart of a method for adjusting radio resource according to preferred embodiment III of the present invention; as shown in Fig. 9, the specific steps are as follows:
step S902, a 3GPP terminal initiates an RRC establishment request to a RAN of a 3GPP network, and requests to establish a radio bearer connection. The RRC connection request may contain a small data indication.

Step S904, according to an attachment flow, the terminal sends a NAS access request, such as an attachment request or a position update request, to an SGSN/MME; the RAN selects a serving SGSN/MME; and the SGSN/MME performs the establishment of bearers and finally establishes a radio bearer and a core network bearer. The NAS access request may contain a small data indication.

Step S906a and step S906b, the SGSN/MME establishes the core network bearer for the terminal, and notifies the RAN to establish a radio bearer. The QoS parameters of the core network bearer are mapped to the radio bearer, which may cause that the actual bandwidth used for sending the small data is inconsistent with the allocated bandwidth, and thus wasting bandwidth resources.

Step S908, the terminal receives and sends the small data packet through the radio bearer and the core network bearer.

Step S910, the media gateway GGSN/SGW/PGW at the core network side starts a radio resource using parameter measurement mechanism based on an operator policy, and measures in a certain period the frequency for receiving and sending the small data packet received and sent on the core network bearer and the length (such as the maximum length parameter and the average length parameter) of the small data packet in unit time, and obtains the small data packet transmission bandwidth, such as parameters about the maximum transmission bandwidth and the average transmission bandwidth.

Step S912, after completing the measurement, the media gateway returns the radio resource using parameter to the SGSN/MME.

Step S914, optionally, when the RAN knows that the terminal is a terminal for receiving and sending the small data packet according to the small data indication, the RAN can request the radio resource using parameter of the terminal to the SGSN/MME.

Step S916, the SGSN/MME may contain a long DRX parameter in the radio resource using parameter based on an operator policy, and send the radio resource using parameter of the terminal to the RAN. The radio resource using parameter may be sent in a NAS access response message, and may also be contained in a radio bearer establishment request message initiated by the SGSN/MME and sent to the RAN. The radio bearer establishment message may contain a practically measured bandwidth parameter.

Step S918, after acquiring the radio resource using parameter of the terminal, the RAN establishes a radio bearer with the terminal. In addition, the idle timer time parameter and the radio bearer bandwidth are adjusted according to the small data characteristic and the operator policy.

The RAN performs radio resource dynamic adjusting of the terminal according to the radio resource using parameter of the terminal as follows: when the frequency for receiving and sending a small data packet is very low (i.e. the small data packet is sent occasionally), the idle timer time is shortened, so that the terminal enters the idle state as soon as possible after ending the data receiving and sending to conserve energy; when the frequency for receiving and sending a small data packet is very high (i.e. the small data packet is sent frequently), the idle timer time is prolonged, so that the terminal tries not to initiate RRC connection or RRC releasing in the time interval of receiving and sending the small data so as to reduce a signalling storm; when the current radio bearer bandwidth is higher than a data packet transmission bandwidth practically used, the current radio bearer bandwidth is reduced properly; and when the current radio bearer bandwidth is lower than a data packet transmission bandwidth practically used, the current radio bearer bandwidth is increased properly.

When the terminal is always in the connected state, the RAN uses the long DRX parameter to save the power consumption of the terminal. The terminal performs data receiving and sending in the short DRX ON period and does not perform data receiving and sending in the long DRX OFF period. The long DRX parameter may be acquired from the SGSN/MME, and may also be formulated by the RAN according to the operator policy.

Step S920, after the radio bearer is established and the radio bearer parameter is adjusted, the radio bearer parameter is notified to the SGSN/MME, and the SGSN/MME modifies the core network bearer according to the adjusted bandwidth, such that the core network bandwidth is consistent with the radio side bandwidth. The establishment and the update of the radio bearer and the core network bearer are completed.

Step S922, the terminal receives and sends the small data packet on the radio bearer and the core network bearer, and since the radio resource has been adjusted dynamically, network optimization and terminal energy conservation effects can be optimized.

### Preferred embodiment IV

It is described in this preferred embodiment that after a terminal accesses a 3GPP network, a mobility management network element SGSN/MME at a core network side acquires a radio resource using parameter of the terminal according to the measurement of NAS access signalling, and sends the radio resource using parameter of the terminal to a RAN. The RAN performs radio resource dynamic adjusting of the terminal according to the radio resource using parameter of the terminal as follows: when the NAS access signalling frequency for receiving and sending a small data packet is very low (i.e. the small data packet is sent occasionally), the idle timer time is shortened, so that the terminal enters the idle state as soon as possible after ending the data receiving and sending to conserve energy; when the NAS access signalling frequency for receiving and sending a small data packet is very high (i.e. the small data packet is sent frequently), the idle timer time is prolonged, so that the terminal tries not to initiate RRC connection or RRC releasing in the time interval of receiving and sending the small data so as to reduce a signalling storm; and when the terminal is always in the connected state, the RAN uses the long DRX parameter to save the power consumption of the terminal. By means of the dynamic adjusting, the network optimizes a network resource for the dynamic adjusting of the small data packet, thus avoiding a signalling storm, and saving power consumption of the terminal to a certain extent.

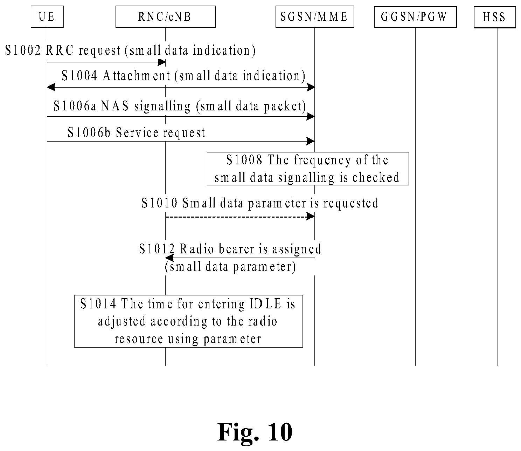

Fig. 10 is a flowchart of a method for adjusting radio resource according to preferred embodiment IV of the present invention; as shown in Fig. 10, the specific steps are as follows:
Step S1002, a 3GPP terminal initiates an RRC establishment request to a RAN of a 3GPP network, and requests to establish a radio bearer connection. The RRC connection request may contain a small data indication.

Step S1004, according to an attachment flow, the terminal sends a NAS access request, such as an attachment request or a position update request, to an SGSN/MME; the RAN selects a serving SGSN/MME; and the SGSN/MME performs the establishment of bearers and finally establishes a radio bearer and a core network bearer. The NAS access request may contain a small data indication.

Step S1006a, optionally, the terminal may carry the small data in NAS access signalling and send same to the SGSN/MME, and then the SGSN/MME sends same to an MTC server through MTC IWF. In this scenario, a core network mobility management network element SGSN/MME starts a radio resource using parameter measurement mechanism based on an operator policy, and measures in a certain period the frequency for receiving and sending the NAS access signalling on the core network bearer.

Step S1006b, optionally, the terminal still receives and sends the small data packet through an IP bearer; at the moment, before initiating a service, the terminal needs to initiate a service request frequently to establish or update the bearer. In this scenario, a core network mobility management network element SGSN/MME starts a radio resource using parameter measurement mechanism based on an operator policy, and measures in a certain period the frequency for receiving and sending the NAS access signalling on the core network bearer.

Step S1008, the SGSN/MME acquires the radio resource access parameter of the terminal according to measurement.

Step S1010, optionally, when the RAN knows that the terminal is a terminal for receiving and sending the small data packet according to the small data indication, the RAN can request the radio resource using parameter of the terminal to the SGSN/MME.

Step S1012, the SGSN/MME may contain a long DRX parameter in the radio resource using parameter based on an operator policy, and send the radio resource using parameter of the terminal to the RAN.

Step S1014, after acquiring the radio resource using parameter of the terminal, the RAN adjusts the idle timer time parameter based on the small data characteristic and the operator policy.

The RAN performs radio resource dynamic adjusting of the terminal according to the radio resource using parameter of the terminal as follows: when the NAS access signalling frequency for receiving and sending a small data packet is very low (i.e. the small data packet is sent occasionally), the idle timer time is shortened, so that the terminal enters the idle state as soon as possible after ending the data receiving and sending to conserve energy; and when the NAS access signalling frequency for receiving and sending a small data packet is very high (i.e. the small data packet is sent frequently), the idle timer time is prolonged, so that the terminal tries not to initiate RRC connection or RRC releasing in the time interval of receiving and sending the small data so as to reduce a signalling storm.

When the terminal is always in the connected state, the RAN uses the long DRX parameter to save the power consumption of the terminal. The terminal performs data receiving and sending in the short DRX ON period and does not perform data receiving and sending in the long DRX OFF period. The long DRX parameter may be acquired from the SGSN/MME, and may also be formulated by the RAN according to the operator policy.

The RAN may perform subsequent access control or data receiving and sending operations according to the flow, which need not be described herein.

It should be noted that the steps shown in the flowchart of the drawings can be executed, for example, in a computer system with a set of instructions executable by a computer, in addition, a logic order is shown in the flowchart, but the shown or described steps can be executed in a different order under some conditions.

In summary, according to the method and device for adjusting radio resource provided in the embodiments of the present invention, when a terminal accessing a 3GPP network send data frequently or occasionally, a network side optimizes to adjust the radio resource according to the acquired radio resource using parameter of the terminal. On the premise that user experience is not reduced, the network resource is optimized, thus avoiding a signalling storm caused by the terminal frequently initiating data packet transmission, saving power consumption of the terminal to a certain extent, maximizing the energy conservation of the terminal, and achieving better network optimization and power saving effects. In addition, the radio bearer bandwidth of the transmission data packet can be reduced to a certain extent (especially for a small data packet, since the bandwidth occupied by the small data packet is relatively small, which is more required to optimize the air interface bandwidth), so as to enable the radio bearer bandwidth to be matched with the bandwidth of the data packet, which thereby, on the premise that user experience is not reduced, releasing some bandwidth resources, and realizing the maximization of the radio resource utilization rate.

Obviously, those skilled in the art shall understand that the components and steps of the present invention can be realized by using general purpose calculating device, can be integrated in one calculating device or distributed on a network which consists of a plurality of calculating devices. Alternatively, the components and the steps of the present invention can be realized by using the executable program code of the calculating device. Consequently, they can be stored in the storing device and executed by the calculating device, or they are made into integrated circuit component respectively, or a plurality of components or steps thereof are made into one integrated circuit component. In this way, the present invention is not restricted to any particular hardware and software combination.

## Claims

1. A method for adjusting radio resource, comprising:
acquiring, by a Radio Access Network, RAN, a radio resource using parameter of a terminal, wherein the radio resource using parameter of the terminal is used for indicating a rate of occurrence of receiving and sending data packets and/or a data packet transmission bandwidth when the terminal accesses network (S502);
adjusting, by the RAN, a radio bearer resource occupied by the terminal according to the radio resource using parameter of the terminal, wherein
the adjusted radio bearer resource is used by the terminal to transmit data (S504); and
controlling, by the RAN, when the terminal keeps in a connection state for a long time, the terminal to operate by using a long Discontinuous Reception, DRX, parameter, wherein the terminal performs data receiving and sending in a short DRX ON period and does not perform data receiving and sending in a long DRX OFF period;
wherein the RAN acquires the radio resource using parameter from a core network side, or the RAN measures the rate of occurrence of receiving and sending data packets and the data packet transmission bandwidth of the terminal.

2. The method according to claim 1, **characterized in that** acquiring, by the core network side, the radio resource using parameter of the terminal comprises one of the following:
acquiring, by the core network side, the radio resource using parameter of the terminal from subscription data;
acquiring, by a Media Gateway, MG, at the core network side, the radio resource using parameter of the terminal according to the rate of occurrence of receiving and sending data packets and the data packet transmission bandwidth; and
acquiring, by a mobility management network element at the core network side, the radio resource using parameter of the terminal according to the rate of occurrence of an access signalling of the terminal.

3. The method according to claim 1, **characterized in that** adjusting, by the RAN, the radio bearer resource occupied by the terminal according to the radio resource using parameter of the terminal comprises:
according to an operator policy, a data packet characteristic of the terminal and the radio resource using parameter of the terminal, the RAN adjusting at least one of the following parameter: an idle timer time parameter of the terminal, a radio bearer bandwidth occupied by the terminal; wherein the idle timer time parameter is used for representing a time interval of the terminal entering into an idle state from a connection state.

4. The method according to claim 3, **characterized in that** adjusting, by the RAN, the idle timer time parameter of the terminal according to the radio resource using parameter of the terminal comprises:
judging, by the RAN, that the terminal send data packets occasionally or frequently according to the radio resource using parameter of the terminal;
shortening, by the RAN, the idle timer time parameter based on that the terminal send data packets occasionally; and
prolonging, by the RAN, the idle timer time parameter based on that the terminal send data packets frequently.

5. The method according to claim 4, **characterized in that** adjusting, by the RAN, the radio bearer bandwidth of the terminal according to the radio resource using parameter of the terminal comprises:
adjusting, by the RAN, the radio bearer bandwidth occupied by the terminal according to the data packet transmission bandwidth in the radio resource using parameter of the terminal.

6. The method according to claim 1, **characterized in that** after the RAN adjusts the radio bearer resource occupied by the terminal according to the radio resource using parameter of the terminal, further comprising:
sending, by the RAN, the adjusted radio bearer resource parameter to a core network.

7. The method according to any one of claims 1-6, **characterized in that** the radio resource using parameter of the terminal comprises at least one of the following: a rate of occurrence of receiving and sending data packets, a data packet transmission bandwidth of the terminal, a rate of occurrence of an access signalling of the terminal, and DRX parameters.

8. The method according to any one of claims 1-7, **characterized in that** the data packets are small data packets.

9. A Radio Access Network, RAN, comprising:
an acquiring component (62), configured to acquire a radio resource using parameter of a terminal, wherein the radio resource using parameter of the terminal is used for indicating a rate of occurrence of receiving and sending data packets and/or a data packet transmission bandwidth when the terminal accesses network; and
a radio resource adjusting component (64), configured to adjust a radio bearer resource occupied by the terminal according to the radio resource using parameter of the terminal, wherein the adjusted radio bearer resource is used by the terminal to transmit data;
the RAN being further configured to control, when the terminal keeps in a connection state for a long time, the terminal to operate by using a long Discontinuous Reception, DRX parameter, wherein the terminal performs data receiving and sending in a short DRX ON period and does not perform data receiving and sending in a long DRX OFF period;
wherein the acquiring component further comprises:
a receiving element, configured to receive the radio resource using parameter of the terminal from a core network side;
a measuring element, configured to measure the rate of occurrence of receiving and sending data packets and the data packet transmission bandwidth of the terminal.

## Patentansprüche

1. Verfahren zur Anpassung einer Funkressource, umfassend:
die Erfassung eines Funkressourcen-Verwendungsparameters eines Endgeräts von einem Funkzugangsnetzwerk, RAN, wobei der Funkressourcen-Verwendungsparameter des Endgeräts für die Angabe der Häufigkeit des Empfangens und Sendens von Datenpaketen und/oder einer Datenpaket-Übertragungsbandbreite verwendet wird, wenn das Endgerät auf ein Netzwerk zugreift (S502);
die Anpassung einer vom Endgerät belegte Funkträgerressource von den RAN gemäß dem Funkressourcen-Verwendungsparameter des Endgerätes, wobei die angepasste Funkträgerressource vom Endgerät für die Übertragung von Daten (S504) verwendet wird; und
die Steuerung den Betrieb des Endgerätes von den RAN, wenn das Endgerät für einen langen Zeitraum in einem Verbindungszustand bleibt, indem ein langer diskontinuierlicher Empfangs(DRX)-Parameter verwendet wird, wobei das Endgerät einen Datenempfang und -versand in einer kurzen DRX-AN-Periode durchführt und keinen Datenempfang und -versand in einer langen DRX-AUS-Periode durchführt;
wobei das RAN den Funkressourcen-Verwendungsparameter von einer Kernnetzwerkseite erfasst oder das RAN die Häufigkeit des Empfangs und Sendens von Datenpaketen und die Datenpaket-Übertragungsbandbreite des Endgerätes misst.

2. Verfahren gemäß Anspruch 1, **dadurch gekennzeichnet, dass** die Erfassung des Funkressourcen-Verwendungsparameters des Endgerätes über die Kernnetzwerkseite eines von Folgendem umfasst:
Erfassung des Funkressourcen-Verwendungsparameters des Endgeräts von Abonnementdaten über die Kernnetzwerkseite;
Erfassung des Funkressourcen-Verwendungsparameters des Endgerätes auf der Kernnetzwerkseite über einen Media Gateway (MG) gemäß der Häufigkeit des Empfangs und Sendens von Datenpaketen und der Datenpaket-Übertragungsbandbreite; und
Erfassung des Funkressourcen-Verwendungsparameters des Endgerätes mithilfe eines Mobilitätsmanagement-Netzwerkelements auf der Kernnetzwerkseite gemäß der Häufigkeit der Zugriffssignalisierung vom Endgerät.

3. Verfahren gemäß Anspruch 1, **dadurch gekennzeichnet, dass** das Anpassen der vom Endgerät belegten Funkträgerressource über das RAN gemäß dem Funkressourcen-Verwendungsparameter des Endgerätes umfasst, dass:
gemäß einer Betreiberrichtlinie, einer Datenpaketeigenschaft des Endgerätes und des Funkressourcen-Verwendungsparameters des Endgerätes, das RAN zumindest einen der folgenden Parameter anpasst: einen Leerlaufzeitgeber-Zeitparameter des Endgerätes, eine vom Endgerät belegte Funkträgerbandbreite; wobei der Leerlaufzeitgeber-Zeitparameter zur Darstellung eines Zeitintervalls verwendet wird, in dem das Endgerät von einem Verbindungszustand in einen Leerlaufzustand wechselt.

4. Verfahren gemäß Anspruch 3, **dadurch gekennzeichnet, dass** das Anpassen des Leerlaufzeitgeber-Zeitparameters des Endgerätes über das RAN gemäß dem Funkressourcen-Verwendungsparameter des Endgerätes umfasst, dass:
über das RAN beurteilt wird, ob das Endgerät gemäß dem Funkressourcen-Verwendungsparameter des Endgerätes Datenpakete gelegentlich oder häufig sendet;
über das RAN, der Leerlaufzeitgeber-Zeitparameter auf Grundlage dessen, dass das Endgerät Datenpakete gelegentlich sendet, verkürzt wird; und
über das RAN, der Leerlaufzeitgeber-Zeitparameter auf Grundlage dessen, dass das Endgerät Datenpakete häufig sendet, verlängert wird.

5. Verfahren gemäß Anspruch 4, **dadurch gekennzeichnet, dass** das Anpassen der Funkträgerbandbreite des Endgerätes über das RAN gemäß dem Funkressourcen-Verwendungsparameter des Endgerätes umfasst, dass:
über das RAN, die vom Endgerät belegte Funkträgerbandbreite gemäß der Datenpaket-Übertragungsbandbreite im Funkressourcen-Verwendungsparameter des Endgerätes angepasst wird.

6. Verfahren gemäß Anspruch 1, **dadurch gekennzeichnet, dass** es, nachdem das RAN die vom Endgerät belegte Funkträgerressource gemäß dem Funkressourcen-Verwendungsparameter des Endgerätes angepasst hat, ferner umfasst, dass:
der angepasste Funkträger-Ressourcenparameter über das RAN an ein Kernnetzwerk gesendet wird.

7. Verfahren gemäß einem der Ansprüche 1-6, **dadurch gekennzeichnet, dass** der Funkressourcen-Verwendungsparameter des Endgerätes zumindest eines von Folgendem umfasst: eine Häufigkeitsrate für das Empfangen und Senden von Datenpaketen, eine Datenpaket-Übertragungsbandbreite des Endgerätes, eine Häufigkeitsrate für eine Zugriffssignalisierung vom Endgerät und DRX-Parameters.

8. Verfahren gemäß einem der Ansprüche 1-7, **dadurch gekennzeichnet, dass** die Datenpakete kleine Datenpakete sind.

9. Funkzugangsnetzwerk (RAN), umfassend:
eine Erfassungskomponente (62), die ausgestaltet ist, um einen Funkressourcen-Verwendungsparameter eines Endgerätes zu erfassen, wobei der Funkressourcen-Verwendungsparameter des Endgerätes zum Angeben einer Häufigkeitsrate für das Empfangen und Senden von Datenpaketen und/oder einer Datenpaket-Übertragungsbandbreite verwendet wird, wenn das Endgerät auf ein Netzwerk zugreift; und
eine Funkressourcen-Anpassungskomponente (64), die ausgestaltet ist, um eine vom Endgerät belegte Funkträgerressource gemäß dem Funkressourcen-Verwendungsparameter des Endgerätes anzupassen, wobei die angepasste Funkträgerressource vom Endgerät zum Übertragen von Daten verwendet wird;
wobei das RAN ferner ausgestaltet ist, um dann, wenn das Endgerät für einen langen Zeitraum in einem Verbindungszustand bleibt, den Betrieb des Endgerätes zu steuern, indem ein langer diskontinuierlicher Empfangs(DRX)-Parameter verwendet wird, wobei das Endgerät einen Datenempfang und - versand in einer kurzen DRX-AN-Periode durchführt und keinen Datenempfang und -versand in einer langen DRX-AUS-Periode durchführt;
wobei die Erfassungskomponente ferner umfasst:
ein Empfangselement, das ausgestaltet ist, um den Funkressourcen-Verwendungsparameter des Endgerätes von einer Kernnetzwerkseite zu empfangen;
ein Messelement, das ausgebildet ist, um die Häufigkeitsrate für das Empfangen und Senden von Datenpaketen und die Datenpaket-Übertragungsbandbreite des Endgerätes zu messen.

## Revendications

1. Une méthode pour régler une ressource radio, comportant:
une acquisition, par un réseau d'accès radio (Radio Access Network, RAN), un paramètre d'utilisation d'une ressource radio d'un terminal, dans lequel le paramètre d'utilisation de la ressource radio du terminal est employée pour indiquer une fréquence de réception et d'envoi de paquets de données et/ou une largeur de bande de transmission de paquets de données lorsque le terminal accède au réseau (S502);
un réglage, par le RAN, d'une ressource support radio occupée par le terminal en fonction du paramètre d'utilisation de la ressource radio du terminal, dans lequel la ressource support radio réglée est utilisée par le terminal pour transmettre des données (S504); et
un contrôle, par le RAN, lorsque le terminal reste dans un état de connexion pendant une longue période, du terminal pour qu'il fonctionne en utilisant un paramètre de réception discontinue, DRX longue, DRX, dans lequel le terminal effectue la réception et l'envoi des données sur une courte période DRX ON et n'effectue pas la réception et l'envoi des données sur une longue période DRX OFF;
dans laquelle le RAN acquiert le paramètre d'utilisation de la ressource radio à partir d'un réseau central, ou le RAN mesure la fréquence de réception et d'envoi de paquets de données et la largeur de bande de transmission des paquets de données du terminal.

2. La méthode selon la revendication 1, **caractérisée en ce que** l'acquisition, par le réseau central, du paramètre d'utilisation de la ressource radio du terminal comprend un des éléments suivants:
l'acquisition, par le réseau central, du paramètre d'utilisation de la ressource radio du terminal à partir des données d'abonnement;
l'acquisition, par une passerelle média (Media Gateway, MG), sur le réseau central, du paramètre d'utilisation de la ressource radio du terminal en fonction de la fréquence de réception et d'envoi de paquets de données et de la largeur de bande de transmission des paquets de données; et
l'acquisition, par un élément du réseau de gestion de mobilité du réseau central, du paramètre d'utilisation de la ressource radio du terminal en fonction de la fréquence de signalement d'accès du terminal.

3. La méthode selon la revendication 1, **caractérisée en ce que** le réglage, par le RAN, d'une ressource support radio occupée par le terminal en fonction du paramètre d'utilisation de la ressource radio du terminal, comprend:
selon une politique d'opérateur, un paquet de données caractéristique du terminal et le paramètre d'utilisation de la ressource radio du terminal, le RAN réglant au moins un des paramètres suivants: un paramètre temporel du compteur de temps d'inactivité du terminal, une largeur de bande du support radio occupée par le terminal; où le paramètre temporel du compteur de temps d'inactivité est utilisé pour représenter un intervalle de temps du terminal passant d'un état connecté à un état inactif.

4. La méthode selon la revendication 3, **caractérisée en ce que** le réglage, par le RAN, du paramètre temporel du compteur de temps d'inactivité du terminal en fonction du paramètre d'utilisation de la ressource radio du terminal, comprend:
le jugement, par le RAN, que le terminal envoie occasionnellement ou fréquemment des paquets de données en fonction du paramètre d'utilisation de la ressource radio du terminal;
la diminution, par le RAN, du paramètre temporel du compteur de temps d'inactivité en se basant sur le fait que le terminal envoie occasionnellement des paquets de données; et
la prolongation, par le RAN, du paramètre temporel du compteur de temps d'inactivité en se basant sur le fait que le terminal envoie fréquemment des paquets de données.

5. La méthode selon la revendication 4, **caractérisée en ce que** le réglage, par le RAN, de la largeur de bande du support radio du terminal en fonction du paramètre d'utilisation de la ressource radio du terminal, comprend:
le réglage, par le RAN, de la largeur de bande du support radio occupée par le terminal en fonction de la largeur de bande de transmission de paquets de données dans le paramètre d'utilisation de la ressource radio du terminal.

6. La méthode selon la revendication 1, **caractérisée par le fait qu'**après le réglage par le RAN de la ressource du support radio occupée par le terminal en fonction du paramètre d'utilisation de la ressource radio du terminal, comprend en outre:
l'envoi, par le RAN, le paramètre réglé de la ressource du support radio vers un réseau central.

7. La méthode selon une quelconque des revendications 1 à 6, **caractérisée par le fait que** le paramètre d'utilisation de la ressource radio du terminal comprend au moins un des éléments suivants: une fréquence de réception et d'envoi de paquets de données, une largeur de bande de transmission de paquets de données du terminal, une fréquence de signalisation d'accès du terminal, et des paramètres DRX.

8. La méthode selon une quelconque des revendications 1 à 7, **caractérisée par le fait que** les paquets de données sont des petits paquets de données.

9. Un réseau d'accès radio, RAN, comprenant:
un composant d'acquisition (62), configuré pour acquérir un paramètre d'utilisation d'une ressource radio d'un terminal, dans lequel le paramètre d'utilisation de la ressource radio du terminal est employée pour indiquer une fréquence de réception et d'envoi de paquets de données et/ou une largeur de bande de transmission de paquets de données lorsque le terminal accède au réseau; et
un composant de réglage de ressource radio (64), configuré pour régler une ressource support radio occupée par le terminal en fonction du paramètre d'utilisation de la ressource radio du terminal, dans laquelle la ressource support radio réglée est utilisée par le terminal pour transmettre des données;
le RAN étant en outre configuré pour, lorsque le terminal reste connecté pendant une longue période, contrôler le terminal pour qu'il fonctionne à l'aide d'un paramètre de réception discontinue (DRX) longue, où le terminal effectue la réception et l'envoi des données sur une courte période DRX ON et n'effectue pas la réception et l'envoi sur une longue période DRX OFF;
dans lequel le composant d'acquisition comprend en outre:
un élément de réception, configuré pour recevoir le paramètre d'utilisation de la ressource radio du terminal à partir du réseau central;
un élément de mesure, configuré pour mesurer la fréquence de réception et d'envoi de paquets de données et la largeur de bande de transmission des paquets de données du terminal.
